# EUROPÄISCHE PATENTSCHRIFT

(11) **EP 3 721 198 B1**
(45) Veröffentlichungstag und Bekanntmachung des Hinweises auf die Patenterteilung: **22.02.2023**
(21) Anmeldenummer: 18811827.7
(22) Anmeldetag: 03.12.2018
(51) Int. Cl.: G01M 15/04

(54) **PRÜFSTAND UND VERFAHREN ZUR DURCHFÜHRUNG EINES PRÜFVERSUCHS**
TEST STAND AND METHOD FOR CARRYING OUT A TEST
BANC D'ESSAI ET PROCÉDÉ DE MISE EN OEUVRE D'UN ESSAI

(30) Priorität: 04.12.2017 AT 509992017
(43) Veröffentlichungstag der Anmeldung: 14.10.2020
(73) Patentinhaber: AVL List GmbH, 8020 Graz (AT)
(72) Erfinder: PFISTER, Felix, 8010 Graz (AT); WINKLER, Wolfgang, 8212 Pischeldorf in der Steiermark (AT); KURAL, Emre, 8020 Graz (AT); SIGNOR, Camillo, 2620 Neunkirchen (AT); HOCHMANN, Gerald, 8151 Hitzendorf (AT)
(74) Vertreter: Patentanwälte Pinter & Weiss OG
(86) Internationale Anmeldenummer: PCT/EP2018/083296
(87) Internationale Veröffentlichungsnummer: WO 2019/110480

(56) Entgegenhaltungen:
- DE-A1-102014 006 321
- US-A- 5 193 062

## Beschreibung

Die gegenständliche Erfindung betrifft ein Verfahren zur Durchführung eines Prüfversuchs auf einem Prüfstand zur Nachbildung einer Testfahrt eines Fahrzeugs entlang einer Fahrtstrecke, wobei am Prüfstand zur Durchführung des Prüfversuchs ein Verbrennungsmotor mit einer Belastungsmaschine verbunden wird und sowohl der Verbrennungsmotor, als auch die Belastungsmaschine von einer Prüfstandautomatisierungseinheit gemäß einer eingestellten Betriebs-Regelungsart durch Vorgabe von Sollwerten des Prüflaufs für den Verbrennungsmotor und der Belastungsmaschine geregelt wird, sowie einen entsprechenden Prüfstand.

In der Entwicklung von Verbrennungsmotoren, Antriebsträngen mit Verbrennungsmotoren und Fahrzeugen mit Verbrennungsmotoren, spielt die Überprüfung des Emissions- und Verbrauchsverhaltens eine zentrale Rolle. In allen Phasen der Entwicklung erfolgt die Überprüfung des Emissions- und Verbrauchsverhaltens des Verbrennungsmotors auf Prüfständen, wie einem Motorprüfstand, Antriebsstrangprüfstand oder Rollenprüfstand. Die gesetzlichen Rahmenbedingungen für diese Überprüfung verändern sich aber zurzeit sehr stark. Während früher vornehmlich genormte Fahrzyklen, wie beispielsweise der New European Driving Cycle (NEDC), für diese Überprüfung verwendet wurde, wird nun zusätzlich die Überprüfung unter realen Fahrbedingungen gefordert. Für das Emissionsverhalten kommen hierfür sogenannte Real Driving Emission (RDE) Prüfversuche zur Anwendung, bei denen kein bestimmte Fahrzyklus vorgegeben wird, sondern eine mehr oder weniger zufällige Fahrstrecke zurückgelegt wird, die lediglich gewissen festgelegten Rahmenbedingungen entsprechen muss.

Für die Entwicklung von Verbrennungsmotoren, Antriebssträngen oder Fahrzeugen auf dem Prüfstand ist es daher auch erwünscht, die Überprüfung am Prüfstand mit solchen realen Prüfversuchen durchzuführen.

Es ist daher zum einen erforderlich aus realen Testfahrten mit einem Fahrzeug auf einer realen Straße Messwerte der Testfahrt, wie beispielsweise GPS-Daten, Motordrehzahl, Fahrpedalstellung, Fahrzeuggeschwindigkeit, usw., zu erfassen. Zum anderen muss dann aus den erfassten Messwerten ein für die Testfahrt repräsentativer Prüflauf für einen Prüfstand erstellt werden, der dann am Prüfstand gesamt oder teilweise durchlaufen werden kann, um beispielsweise das Emissions- oder Verbrauchsverhalten des Verbrennungsmotors zu erfassen und auszuwerten. Beispiele hierfür können der DE 10 2012 018 359 A1 oder der WO 2015/166069 A2 entnommen werden. Die 10 2014 006 321 A1 beschreibt das hinsichtlich der Analyse der Energieeffizienz eines Kraftfahrzeuges oder einer Komponente davon.

Am Prüfstand wird der Verbrennungsmotor gemäß den Vorgaben des Prüflaufs betrieben, entweder alleine (Motorprüfstand), oder in Kombination mit anderen Komponenten (Antriebsstrangprüfstand, Rollenprüfstand). Zur Durchführung des Prüfversuchs wird der Verbrennungsmotor am Prüfstand, direkt oder indirekt, mit einer Belastungsmaschine (Dynamometer) verbunden, und die Belastungsmaschine und der Verbrennungsmotor werden durch eine Prüfstandautomatisierungseinheit gemäß den Vorgaben des Prüflaufs geregelt. An einen Verbrennungsmotor kann die Belastungsmaschine beispielswiese direkt über eine Prüfstandwelle angebunden werden. An einem Antriebsstrang beispielsweise indirekt über eine angetriebene Radnabe einer Halbachse des Antriebsstranges, wobei an einen Antriebsstrangprüfstand üblicherweise an den angetriebenen Radnaben an beiden Seiten einen Belastungsmaschine angebunden wird. Auf einem Rollenprüfstand treibt die Belastungsmaschine eine Rolle, auf der ein Rad des Fahrzeugs abrollt. Damit ist auch auf einem Rollenprüfstand die Belastungsmaschine indirekt (über die Rolle) mit dem Verbrennungsmotor verbunden. Mittels der Belastungsmaschine wird dabei in der Regel die Drehzahl des Verbrennungsmotors (oder des Antriebsstranges) eingestellt, indem diese ein Belastungsmoment für den Verbrennungsmotor erzeugt. Mit dem Verbrennungsmotor wird in der Regel ein Motormoment eingestellt. Dazu werden der Motorsteuereinheit üblicherweise Fahrpedalstellungen vorgegeben, die die Motorsteuereinheit in Motorsteuersignale (Einspritzmenge, Einspritzzeitpunkt, EGR Einstellung, Zündzeitpunkt, usw.) umsetzt. Es werden folglich als Prüfversuch Sollwerte für die Motordrehzahl und das Motormoment oder dazu äquivalente Grö-βe, wie beispielsweise eine Fahrpedalstellung, eine Antriebsstrangdrehzahl, usw., benötigt, um den Prüflauf am Prüfstand durchführen zu können. Diese Sollwerte, eigentlich ein zeitlicher Verlauf (auch als zeitdiskreter Verlauf) der Sollwerte, müssen aus der realen Testfahrt generiert werden.

Am Prüfstand, bzw. in der Prüfstandautomatisierungseinheit, können auch verschiedene Regelungsarten für die Durchführung des Prüflaufs implementiert sein. Wird als Sollwert direkt die Fahrpedalstellung vorgegeben, dann spricht man üblicherweise von einer N/α-Regelung (N für die Drehzahl und α für die Fahrpedalstellung). Werden hingegen Drehmomente vorgegeben, dann spricht man üblicherweise von einer N/T-Regelung (N für die Drehzahl und T für das Drehmoment). In diesem Regelungsmodus muss auch ein Istmoment des Verbrennungsmotors erfasst werden, um aus der Abweichung des Istmoments vom vorgegebenen Drehmoment eine Fahrpedalstellung zu ermitteln, die benötigt wird um die Abweichung auszugleichen und die dann wiederum der Motorsteuereinheit (ECU) vorgegeben werden kann. Hierzu ist in der Prüfstandautomatisierungseinheit in der Regel auch ein geeigneter Regler implementiert, der das erledigt. Daneben können auch noch andere Sollwerte, die für die Durchführung eines Prüflaufs geeignet sind, vorgegeben werden. Solche andere Sollwerte sind dabei vorzugsweise Größen, die äquivalent zu einem Drehmoment oder einer Fahrpedalstellung sind, oder aus denen ein Drehmoment oder eine Fahrpedalstellung abgeleitet werden kann. Beispiele hierfür sind Einspritzmenge oder effektiver Zylindermitteldruck, ECU Motormoment. In diesem Fall spricht man in der Regel von einer N/x-Regelung (N für die Drehzahl und x für die andere geregelte Größe). In gleicher Weise kann es am Prüfstand auch eine T/N-, T/α oder T/x-Regelung geben, wobei mit der Belastungsmaschine das Drehmoment eingestellt wird. Für die Durchführung des Prüfversuchs am Prüfstand wird die zu verwendende Regelungsart vom Prüfstandfahrer vorgegeben bzw. ausgewählt.

Da Prüfstandzeiten teuer sind, die Kapazität der Prüfstände üblicherweise beschränkt ist und Prüfstandversuche aufwendig sind, ist es ein generelles Ziel die Durchführung der Prüfversuche zu vereinfachen. Dabei sollen aber trotzdem Prüfversuche mit hoher Aussagekraft, beispielsweise hinsichtlich gesetzlicher Vorgaben oder Rahmenbedingungen, durchgeführt werden. Es ist daher eine Aufgabe der gegenständlichen Erfindung, dieses Ziel mit einem Prüfstand und einen Verfahren zur Durchführung eines Prüfversuchs zur Nachbildung einer Testfahrt eines Fahrzeugs entlang einer Fahrtstrecke zu ermöglichen.

Diese Aufgabe wird durch die Erfindung gelöst, indem zumindest eine Leerlaufbetriebszeit des Verbrennungsmotors in einem zeitlichen Verlauf einer Fahrzeuggeschwindigkeit und in einem zeitlichen Verlauf einer Fahrpedalstellung als ein Zeitbereich ermittelt wird, während dem sowohl die Fahrzeuggeschwindigkeit, als auch die Fahrpedalstellung Null ist, und/oder zumindest eine Schubbetriebbetriebszeit des Verbrennungsmotors in einem zeitlichen Verlauf einer Motordrehzahl und im zeitlichen Verlauf der Fahrpedalstellung als ein Zeitbereich ermittelt wird, während dem die Fahrpedalstellung Null ist und die Motordrehzahl größer einer vorgegebenen Leerlaufdrehzahl ist, und dass in der Prüfstandautomatisierungseinheit zur Durchführung des Prüfversuchs während der Leerlaufbetriebszeit anstelle der Betriebs-Regelungsart eine vorgegebene Leerlauf-Regelungsart eingestellt wird und/oder während der Schubbetriebbetriebszeit anstelle der Betriebs-Regelungsart eine vorgegebene Schubbetrieb-Regelungsart eingestellt wird.

Während einer Leerlaufbetriebszeit wird vorzugsweise Leerlauf-Regelungsart eingestellt, bei der der Belastungsmaschine als Sollwert ein Drehmoment von Null und dem Verbrennungsmotor als Sollwert eine Fahrpedalstellung von Null vorgegeben wird.

Während einer Schubbetriebbetriebszeit wird vorzugsweise als Schubbetrieb-Regelungsart eine N/α-Regelung eingestellt, weil damit sichergestellt werden kann, dass die Motorsteuereinheit des Verbrennungsmotors alleine das Drehmoment des Verbrennungsmotors regelt. Eine einfache automatisierte Durchführung des Prüfversuchs wird ermöglicht, wenn aus Messwerten der Testfahrt eine Leerlaufbetriebszeit als Zeitbereich gesucht wird, bei dem im zeitlichen Verlauf der Fahrzeuggeschwindigkeit und im zeitlichen Verlauf der Fahrpedalstellung sowohl die Fahrzeuggeschwindigkeit, als auch die Fahrpedalstellung Null ist. Dabei kann auch eine Leerlaufdrehzahl des Verbrennungsmotors einfach als Motordrehzahl während der Leerlaufbetriebszeit ermittelt wird. Hierbei kann auch zwischen einer kalten und einer warmen Leerlaufdrehzahl unterschieden werden.

Weitere Leerlaufbetriebszeiten lassen sich auf einfache Weise als Zeitbereiche finden, während denen die Motordrehzahl der Leerlaufdrehzahl entspricht.

Eine einfache automatisierte Durchführung des Prüfversuchs wird ermöglicht, wenn aus Messwerten der Testfahrt eine Schubbetriebbetriebszeit als Zeitbereich gesucht wird, bei dem im zeitlichen Verlauf der Motordrehzahl und der Fahrpedalstellung die Fahrpedalstellung Null ist und die Motordrehzahl größer einer vorgegebenen Leerlaufdrehzahl ist.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine Testfahrt mit einem Fahrzeug entlang einer Fahrtstrecke,
Fig.2 die Simulation einer Testfahrt mit einem Fahrzeug entlang einer Fahrtstrecke,
Fig.3 die Ermittlung einer Leerlaufbetriebszeit des Verbrennungsmotors,
Fig.4 die Ermittlung einer Schubbetriebbetriebszeit des Verbrennungsmotors,
Fig.5 verschiedene Regelungsarten der Prüfstandautomatisierungseinheit während der Durchführung des Prüfversuchs,
Fig.6 eine N/α-Regelung am Prüfstand und
Fig.7 eine N/T-Regelung am Prüfstand.

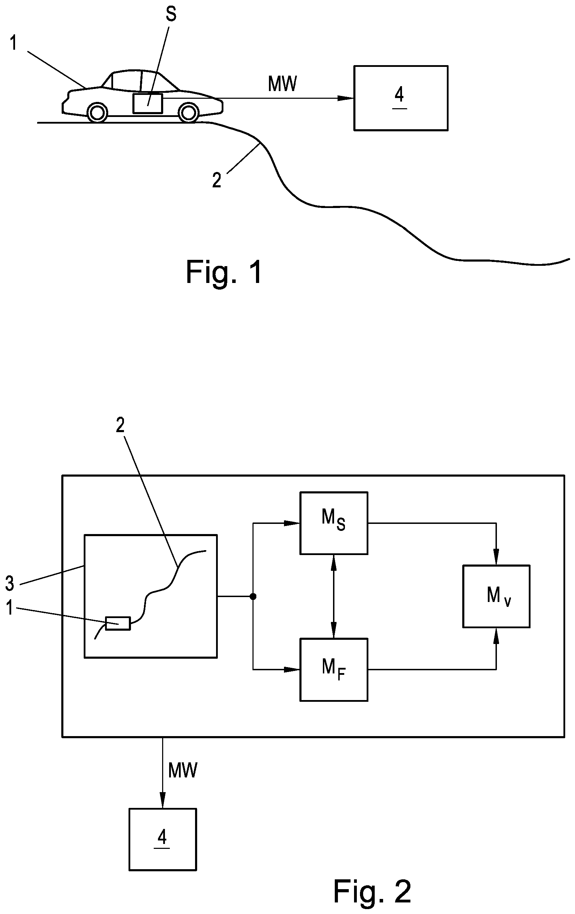

Ausgangspunkt der Erfindung ist eine Testfahrt mit einem Fahrzeug 1 entlang einer vorgegebenen Fahrtstrecke 2 (Fig.1). Dabei kann ein reales Fahrzeug 1 durch einen Fahrer auf einer realen Straße (auch eine Strecke auf einem Testgelände) bewegt werden. Es ist aber auch denkbar, dass die Testfahrt entlang der Straße simuliert wird (Fig.2) oder dass eine Testfahrt mit einem Fahrzeug 1 auf einem Rollenprüfstand durchgeführt wird. Die Simulation erfolgt beispielsweise auf einer geeigneten Hardware (Computer) mit geeigneter Software. Zur Simulation könnte beispielsweise in einer digitalen Karte 3 eine Fahrtstrecke 2 ausgewählt werden und die Fahrt eines Fahrzeugs 1 entlang dieser Fahrtstrecke 2 simuliert werden. Das kann beispielsweise in hinlänglich bekannter Weise durch die Kombination eines Straßenmodells Ms, das die Straßenbedingungen (Seehöhe, Steigung, Kurvenradius, Stra-ßenbelag, usw.) abbildet, einem Fahrermodell M_{F}, das die Eigenschaften eines Fahrers (Schaltverhalten, Fahrverhalten, usw.) abbildet, und einem Fahrzeugmodell Mv, das die Dynamik des Fahrzeugs abbildet, erfolgen. Natürlich können dazu auch noch weitere Modelle implementiert und in die Simulation eingebunden sein, wie beispielsweise ein Reifenmodell. In solchen Simulationen können auch Ereignisse, wie beispielsweise Verkehrszeichen, Ampeln, andere Verkehrsteilnehmer, Straßenverkehr, usw. berücksichtigt werden. Die dazu notwendigen Simulationsmodelle sind bekannt und verfügbar, weshalb hier nicht näher darauf eingegangen werden muss. Für die Durchführung der Testfahrt auf einem Rollenprüfstand wird eine gewünschte Testfahrt vorgegeben.

Wenn in weiterer Folge von einer Testfahrt mit einem Fahrzeug gesprochen wird, dann ist ausdrücklich eine echte Fahrt mit einem realen Fahrzeug 1 auf einer Fahrtstrecke 2 auf einer realen Straße umfasst, als auch eine simulierte Fahrt mit einem virtuellen Fahrzeug 1 entlang einer virtuellen Fahrtstrecke 2, als auch eine Testfahrt auf einem Rollenprüfstand.

Während der Testfahrt werden Messwerte MW erfasst. Die Messwerte MW repräsentieren damit die Testfahrt mit dem Fahrzeug 1 entlang einer Fahrtstrecke 2. Das kann über entsprechende Sensoren S erfolgen, insbesondere Sensoren, die ohnehin in einem Fahrzeug 1 vorhanden sind. Die Messwerte MW solcher Fahrzeugsensoren S können beispielsweise über die On-Board Diagnose (OBD) Schnittstelle direkt ausgelesen werden. Selbstverständlich kann das Fahrzeug 1 für die Testfahrt aber auch mit nicht serienmäßigen Fahrzeugsensoren ausgerüstet werden, um weitere Messwerte MW, beispielsweise Emissionswerte (NOx, HC (CO, CO₂, usw.)), zu erfassen. In der Simulation können beliebige Simulationsgrößen als "Messwerte" MW der verschiedenen implementierten Simulationsmodelle herangezogen werden. Hierfür können auch zusätzliche Simulationsmodelle implementiert sein, um eine bestimmte Größe zu simulieren, beispielsweise ein Emissionsmodell zur Simulation der Emissionswerte.

Gleichfalls ist es möglich, weitere Messwerte MW aus anderen erfassten Messwerten MW zu ermitteln. Das kann während der Testfahrt erfolgen oder auch erst nach der Testfahrt. Ein Beispiel hierfür ist das Drehmoment des Verbrennungsmotors oder eine Ganginformation mit Gangschaltzeitpunkten, eventuell auch Kupplungszeitpunkten, die oftmals während einer realen Testfahrt nicht gemessen werden können oder einfach nicht gemessen werden. Das Drehmoment kann dann beispielsweise aus bekannten Kennfeldern (z.B. ein Kennfeld für Drehzahl, Fahrpedalstellung, Drehmoment) entnommen werden oder kann auch aus Modellen oder physikalischen Zusammenhängen berechnet werden. Aus einer Straßensteigung, der Fahrzeugmasse und einem Widerstandsfaktor (Rollwiderstand, Luftwiderstand) und der Fahrzeugdynamik (Geschwindigkeit, Beschleunigung) könnte z.B. das Drehmoment berechnet werden. Aus der Fahrzeuggeschwindigkeit und einer Fahrzeugwiderstandskraft (aus Steigung der Straße, Rollwiderstand, Luftwiderstand, usw.) könnte die Motorleistung ermittelt werden, aus der dann mit der Drehzahl das Drehmoment berechnet werden kann. Es ist offensichtlich, dass es hier eine Fülle von Möglichkeiten gibt, um nicht direkt gemessene Grö-ßen zu bestimmen. Die Ganginformation kann beispielsweise aus anderen Messwerten MW, beispielsweise Motordrehzahl und Fahrzeuggeschwindigkeit, gewonnen werden.

Die Messwerte MW können aber auch einfach vorliegen, beispielsweise aus früher durchgeführten Testfahrten, Simulationen oder auch in Form von beliebig erstellten Messwerten, die eine Testfahrt mit einem Fahrzeug 1 entlang einer Fahrtstrecke 2 beschreiben.

Wenn nachfolgend von Messwerten MW gesprochen wird, dann sind daher sowohl direkt gemessene Größen umfasst, als auch Größen aus einer Simulation, als auch Größen die aus anderen bekannten Größen (gemessen oder simuliert) berechnet werden, als auch anderweitig vorliegende Messwerte.

Für die Umsetzung des erfindungsgemäßen Verfahrens werden die zeitlichen Verläufe (oder äquivalent wegbasierte Verläufe) zumindest der Fahrzeuggeschwindigkeit v, der Fahrpedalstellung α und der Motordrehzahl N des Fahrzeugs 1 der Testfahrt benötigt, die entweder als Messwerte MW vorgegeben werden oder als Messwerte MW wie oben beschrieben erhalten werden. Selbstverständlich könnten auch dazu äquivalente Größen herangezogen werden, beispielsweise als Motordrehzahl N eine beliebige Drehzahl eines Antriebsstranges. Wenn von einem zeitlichen Verlauf gesprochen wird, dann umfasst das natürlich zeitkontinuierliche Verläufe, als auch zeitdiskrete Verläufe.

Ziel des Prüfversuchs am Prüfstand 10 ist eine möglichst realitätsnahe Nachbildung der Testfahrt am Prüfstand 10. Während einer Testfahrt unterliegt das Fahrzeug 1 aber in der Regel verschiedenen Betriebszuständen. In einer Haltephase des Fahrzeugs 1 befindet sich der Verbrennungsmotor im Leerlauf. Dabei ist die Fahrzeuggeschwindigkeit Null und das Gaspedal wird nicht betätigt. Dieser Betrieb wird in einem realen Fahrzeug 1 üblicherweise durch einen eigenen Leerlaufmodus der Motorsteuereinheit ECU geregelt. Im Schubbetrieb wird das Fahrpedal nicht betätigt und der Verbrennungsmotor wirkt bremsend (Motorbremse), d.h. der Verbrennungsmotor erzeugt ein negatives Drehmoment. Diese Betriebszustände erzeugen oftmals besonders hohe Emissionen oder Verbrauchswerte, die für den Prüfversuch in Anbetracht der steigenden gesetzlichen Anforderungen natürlich besonders interessant sind. Der Prüfversuch am Prüfstand 10 mit einem Prüfling mit einem Verbrennungsmotor 11, beispielsweise ein Fahrzeug oder einer Fahrzeugkomponente (Verbrennungsmotor, Antriebsstrang) soll daher besonders auch diese Betriebszustände abbilden, um mit dem Prüfversuch sehr realitätsnahe Ergebnisse erzielen zu können.

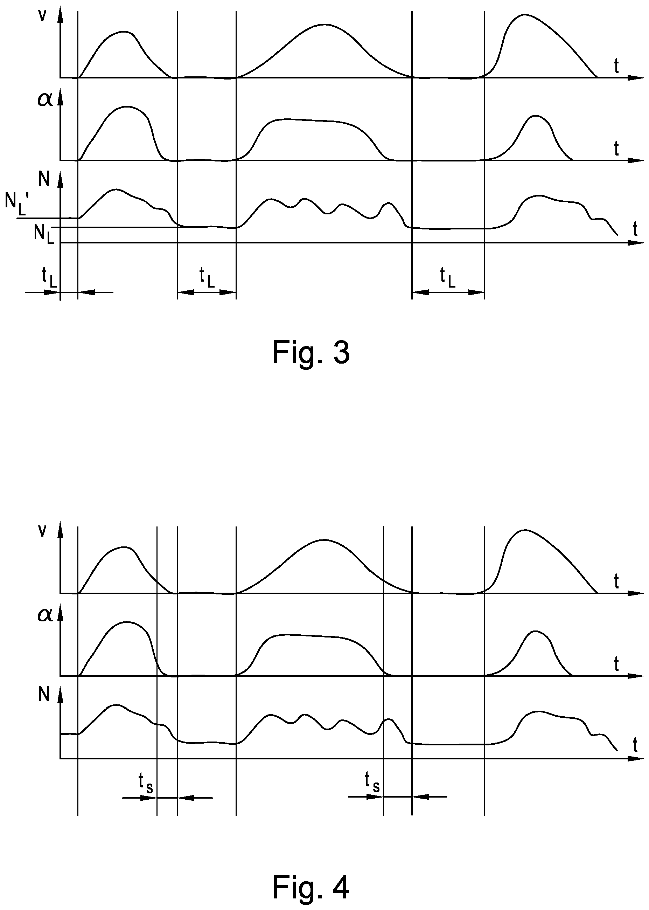

Um das zu ermöglichen werden die während der Testfahrt erfassten Messwerte MW zuerst in einer Auswerteeinheit 4 analysiert, um einen Leerlauf und/oder einen Schubbetrieb während der Testfahrt zu erkennen. Das wird anhand der Fig.3 erläutert.

Fig.3 zeigt die zeitlichen Verläufe der Fahrzeuggeschwindigkeit v, der Fahrpedalstellung α und der Motordrehzahl N, die als Messwerte MW vorliegen. Um die Leerlaufphasen während der Testfahrt, also in den Messwerten MW, zu detektieren, werden die zeitlichen Verläufe der Fahrzeuggeschwindigkeit v und der Fahrpedalstellung α untersucht, um Zeitbereiche zu finden, in denen die Fahrpedalstellung α Null ist und die Fahrzeuggeschwindigkeit v Null ist. Für die praktische Realisierung wird vorzugsweise ein Fenster um Null vorgegeben, beispielsweise wird eine Fahrzeuggeschwindigkeit v<0.5m/s als "Null" verstanden. Ein Fenster wird dabei natürlich so eng gewählt, dass unter Berücksichtigung von Messwertschwankungen und Ungenauigkeiten nur die den jeweiligen Zustand beschreibenden Zeitbereiche erfasst werden. Treffen beide Bedingungen zu, kann von einem Leerlaufbetrieb ausgegangen werden. Damit können alle Leerlaufbetriebszeiten t_{L} während der Testfahrt ermittelt werden.

Es kann auch eine Motordrehzahl N in einer Leerlaufbetriebszeiten t_{L}, vorzugsweise als Mittelwert über die Leerlaufbetriebszeit t_{L}, ermittelt werden, um eine Leerlaufdrehzahl N_{L} zu ermittelt. Dabei kann auch zwischen einer warmen Leerlaufdrehzahl N_{L} und einer kalten Leerlaufdrehzahl N_{L}' unterschieden werden. Wenn die Leerlaufdrehzahl N_{L}, N_{L}' ermittelt wurde, dann können als Leerlaufbetriebszeiten t_{L} alle Zeitbereiche der Motordrehzahl N mit diesen Drehzahlen (eventuell wieder in einem vorgegebenen Fenster um diese Drehzahl) identifiziert werden. Damit können ebenfalls alle Zeitbereiche t_{L} in der Testfahrt mit Leerlaufbetrieb ermittelt werden.

Für die Bestimmung der Schubbetriebszeiten ts mit Schubbetrieb wird von der Kenntnis der Leerlaufdrehzahl N_{L}, eventuell für warm und kalt, des Verbrennungsmotors ausgegangen. Die Leerlaufdrehzahl N_{L} ist dabei entweder ein bekannter Parameter des Verbrennungsmotors, oder kann wie vorhin beschrieben aus den Messwerten MW einer Testfahrt ermittelt werden. Damit können die Schubbetriebszeiten ts identifiziert werden, in denen die Fahrpedalstellung α Null ist (eventuell wieder in einem Fenster um Null), oder annähernd Null ist, und die Motordrehzahl N größer der Leerlaufdrehzahl N_{L} ist. Das ist in Fig.4 dargestellt.

Besonders vorteilhaft wird zuerst die Leerlaufdrehzahl N_{L} (eventuell für warm und kalt) wie oben beschrieben ermittelt und daraus die Leerlaufbetriebszeiten t_{L} mit Leerlauf und die Schubbetriebszeiten ts mit Schubbetrieb abgeleitet. Das ermöglicht eine vollautomatische Verarbeitung der Messwerte MW in der Auswerteeinheit 4.

Selbstverständlich ist es auch möglich für den Prüfversuch entweder nur die Leerlaufbetriebszeiten t_{L} oder die Schubbetriebszeiten t_{S} zu identifizieren.

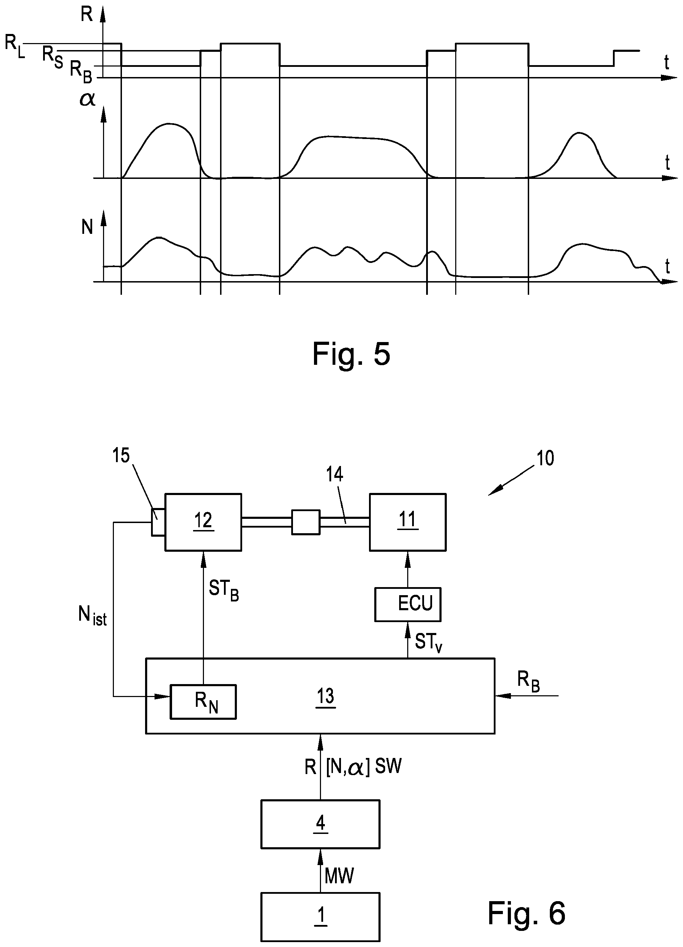

Für die Durchführung des Prüfversuchs am Prüfstand 10 wird anhand der identifizierten Schubbetriebszeiten t_{S} für den Schubbetrieb und/oder Leerlaufbetriebszeiten t_{L} für den Leerlauf die Regelungsart R am Prüfstand 10 geändert, wie anhand der Fig.5 erläutert wird.

Für den Leerlaufbetrieb ist in der Prüfstandautomatisierungseinheit 13 eine eigene Leerlauf-Regelungsart R_{L} implementiert. Bei dieser Regelungsart R_{L} wird für die Belastungsmaschine 12 als Sollwert ein Drehmoment von Null vorgegeben. Der Sollwert für die Fahrpedalstellung α ist ebenfalls Null. Damit stellt sich am Prüfstand 10 eine freie Leerlaufdrehzahl ein.

Für den Schubbetrieb ist es für die Durchführung des Prüfversuchs am Prüfstand 10 wichtig, dass die Motorsteuereinheit ECU alleine das Drehmoment T des Verbrennungsmotors regelt und dass die Prüfstandautomatisierungseinheit 13 nicht in die Regelung der Motorsteuereinheit ECU eingreift. Deshalb wird als Schubbetrieb-Regelungsart Rs in der Prüfstandautomatisierungseinheit 13 eine N/α-Regelung eingestellt, bei der der Motorsteuereinheit ECU als Stellgröße STv die Fahrpedalstellung α=Null übergeben wird. Damit kann am Prüfstand 10 sichergestellt werden, dass die Verbrauchs- und Emissionswerte der Testfahrt im Schubbetrieb realitätsnah und bestmöglich nachgebildet werden.

In Zeiten, in denen weder ein Leerlaufbetrieb noch ein Schubbetrieb vorliegt, kann in der Prüfstandautomatisierungseinheit 13 eine beliebige Regelungsart R konfiguriert sein, beispielsweise eine N/T-Regelung, eine N/x-Regelung, eine N/α-Regelung oder eine T/n-, T/α-oder T/x-Regelung.

Für die Durchführung des Prüfversuchs werden die Sollwerte SW gemäß der eingestellten Regelungsart R benötigt. Diese Sollwerte SW werden aus der Testfahrt gewonnen, wie oben beschrieben. Dazu können bestimmte Messwerte MW der Testfahrt als Sollwerte SW verwendet werden, beispielsweise die Fahrpedalstellung α oder die Motordrehzahl N. Sollwerte SW können aber auch aus Messwerten MW gewonnen werden, wie ebenfalls oben beschrieben, beispielsweise das Drehmoment T oder eine Ganginformation.

Am Prüfstand 10 ist der Verbrennungsmotor 11 mit einer Belastungsmaschine 12 verbunden, beispielsweise über eine Prüfstandswelle 14. Die Prüfstandautomatisierungseinheit 13 regelt sowohl den Verbrennungsmotor 11, als auch die Belastungsmaschine 12 gemäß den Vorgaben des Prüfversuchs in Form bestimmter Sollwerte SW für eine zu regelnde Größe und der Regelungsart R. Aus den vorgegebenen Sollwerten SW ermittelt die Prüfstandautomatisierungseinheit 13 die Stellgrößen, mit denen der Verbrennungsmotor 11 und die Belastungsmaschine 12 angesteuert werden. Im Falle der Belastungsmaschine 12 ist die Stellgrö-βe ST_{B} beispielsweise eine Drehzahl (insbesondere bei einer N/T-, N/x-, oder N/α-Regelung), womit die Motordrehzahl N des Verbrennungsmotors 11 eingestellt wird. Dazu kann in der Prüfstandautomatisierungseinheit 13 auch ein entsprechender Drehzahlregler R_{N} implementiert sein, der auch einen Istwert der Drehzahl Nᵢₛₜ erhalten kann, der beispielsweise mittels eines Drehzahlsensors 15 an der Belastungsmaschine 12 erfasst wird. Der Verbrennungsmotor 11 wird anhand einer geeigneten Stellgröße STv geregelt, beispielsweise eine Fahrpedalstellung α, wie eingangs beschrieben.

Die Prüfstandautomatisierungseinheit 13 erhält zur Durchführung des Prüfversuchs die entsprechenden zeitlichen Verläufe (auch als zeitdiskrete Verläufe) der Sollwerte SW, beispielsweise von der Auswerteeinheit 4. Dabei ist es auch unerheblich, ob der ganze zeitliche Verlauf für die Durchführung des Prüflaufs übergeben wird, oder ob zu jedem Zeitschritt der Regelung der jeweils einzuregelnde Sollwert SW übergeben wird. Ebenso wird der Prüfstandautomatisierungseinheit 13 die Regelungsart R vorgegeben, beispielsweise von der Auswerteeinheit 4. Für die Durchführung des Prüfversuchs am Prüfstand 10 kann in der Prüfstandautomatisierungseinheit 13 eine gewünschte Betriebs-Regelungsart R_{B} konfiguriert sein, z.B. durch den Prüfstandfahrer. Diese Betriebs-Regelungsart R_{B} kann durch die Vorgabe der Regelungsart R für die Realisierung des Leerlaufbetriebs und/oder Schubbetriebs zeitweise geändert wird, wie in Fig.5 dargestellt. Hier wird die Regelungsart R im Leerlauf auf die vorgegebene Leerlauf-Regelungsart R_{L} geändert und im Schubbetrieb auf die vorgegebene Schubbetrieb-Regelungsart Rs (N/α-Regelung). Ansonsten wird die gewünschte und konfigurierte Betriebs-Regelungsart R_{B} verwendet, beispielsweise eine N/T-, N/α- oder N/x-oder T/n-, T/α- oder T/x-Regelungsart.

In Fig.6 ist eine N/α-Regelung dargestellt. Hierfür erhält die Prüfstandautomatisierungseinheit 13 als Sollwerte SW die Motordrehzahl N und eine Fahrpedalstellung α (eigentlich zeitliche Verläufe davon). Die Fahrpedalstellung α kann von der Prüfstandautomatisierungseinheit 13 der Motorsteuereinheit ECU als Stellgröße STv übergeben werden.

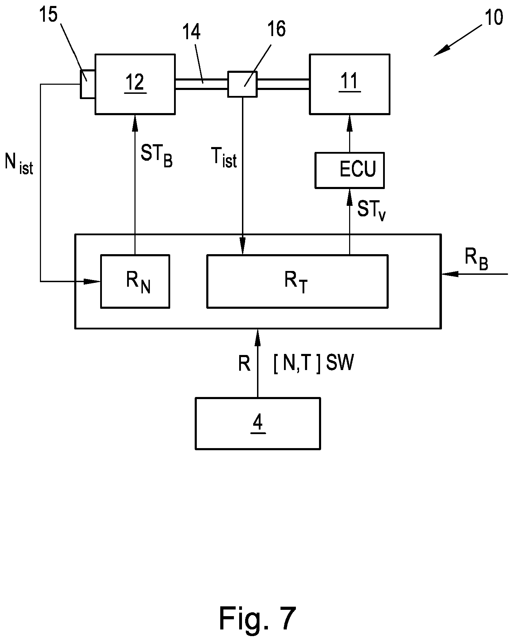

Für eine N/T-Regelung (Fig.7) werden der Prüfstandautomatisierungseinheit 13 als Sollwerte SW für die Durchführung eines Prüfversuchs ein zeitlicher Verlauf des Drehmoments T und ein zeitlicher Verlauf der Motordrehzahl N übergeben, beispielsweise von der Auswerteeinheit 4. In der Prüfstandautomatisierungseinheit 13 ist beispielsweise ein Drehmomentenregler R_{T} implementiert, der aus einem Istwert des Drehmoments Tᵢₛₜ, der z.B. mittels eines Drehmomentensensors 16 an der Prüfstandswelle 14 gemessen werden kann oder aus anderen gemessenen Größen auch geschätzt werden kann (Beobachter), und dem vorgegebenen Sollwert SW eine Fahrpedalstellung α ermittelt, die an die Motorsteuereinheit ECU zum Regeln des Verbrennungsmotors 11 übergeben wird. In Fig.7 ist auch der Drehzahlregler R_{N} für die Regelung der Belastungsmaschine 12 angedeutet.

Selbstverständlich kann die Auswerteeinheit 4 immer sowohl den zeitlichen Verlauf einer Fahrpedalstellung α und den zeitlichen Verlauf des Drehmoments T des Verbrennungsmotors 11 ermitteln und gemeinsam mit der Motordrehzahl N und der Regelungsart R an die Prüfstandautomatisierungseinheit 13 übergeben. Die Auswerteeinheit 4 könnte auch in der Prüfstandautomatisierungseinheit 13 implementiert sein, als Hardware und/oder Software.

## Patentansprüche

1. Verfahren zur Durchführung eines Prüfversuchs auf einem Prüfstand (10) zur Nachbildung einer Testfahrt eines Fahrzeugs (1) entlang einer Fahrtstrecke (2), wobei am Prüfstand (10) zur Durchführung des Prüfversuchs ein Verbrennungsmotor (11) mit einer Belastungsmaschine (12) verbunden wird und sowohl der Verbrennungsmotor (11), als auch die Belastungsmaschine (12) von einer Prüfstandautomatisierungseinheit (13) gemäß einer eingestellten Betriebs-Regelungsart (R_{B}) durch Vorgabe von Sollwerten (SW) des Prüflaufs für den Verbrennungsmotor (11) und der Belastungsmaschine (12) geregelt wird, **dadurch gekennzeichnet, dass** zumindest eine Leerlaufbetriebszeit (t_{L}) des Verbrennungsmotors (11) in einem zeitlichen Verlauf einer Fahrzeuggeschwindigkeit (v) und in einem zeitlichen Verlauf einer Fahrpedalstellung (α) als ein Zeitbereich ermittelt wird, während dem sowohl die Fahrzeuggeschwindigkeit (v), als auch die Fahrpedalstellung (α) Null ist, und/oder zumindest eine Schubbetriebbetriebszeit (ts) des Verbrennungsmotors (11) in einem zeitlichen Verlauf einer Motordrehzahl (N) und im zeitlichen Verlauf der Fahrpedalstellung (α) als ein Zeitbereich ermittelt wird, während dem die Fahrpedalstellung (α) Null ist und die Motordrehzahl (N) größer einer vorgegebenen Leerlaufdrehzahl (N_{L}) ist, **und dass** in der Prüfstandautomatisierungseinheit (13) zur Durchführung des Prüfversuchs während der Leerlaufbetriebszeit (t_{L}) anstelle der Betriebs-Regelungsart (R_{B}) eine vorgegebene Leerlauf-Regelungsart (R_{L}) eingestellt wird und/oder während der Schubbetriebbetriebszeit (ts) anstelle der Betriebs-Regelungsart (R_{B}) eine vorgegebene Schubbetrieb-Regelungsart (Rs) eingestellt wird.

2. Verfahren nach Anspruch 1, **dadurch gekennzeichnet, dass** während einer Leerlauf-Regelungsart (R_{L}) der Belastungsmaschine (12) als Sollwert (SW) ein Drehmoment (T) von Null und dem Verbrennungsmotor (11) als Sollwert (SW) eine Fahrpedalstellung (α) von Null vorgegeben wird.

3. Verfahren nach Anspruch 1, **dadurch gekennzeichnet, dass** als Schubbetrieb-Regelungsart (Rs) eine N/α-Regelung eingestellt wird.

4. Verfahren nach Anspruch 1, **dadurch gekennzeichnet, dass** als Betriebs-Regelungsart (R_{B}) eine N/T-, N/α-, N/x-, T/n-, T/α- oder T/x-Regelung eingestellt wird.

5. Verfahren nach Anspruch 1, **dadurch gekennzeichnet, dass** eine Leerlaufdrehzahl (N_{L}) des Verbrennungsmotors (11) als Motordrehzahl (N) während der Leerlaufbetriebszeit (t_{L}) ermittelt wird.

6. Verfahren nach Anspruch 5, **dadurch gekennzeichnet, dass** in einem zeitlichen Verlauf einer Motordrehzahl (N) als zumindest eine weitere Leerlaufbetriebszeit (t_{L}) ein Zeitbereich gesucht wird, während dem die Motordrehzahl (N) der Leerlaufdrehzahl (N_{L}) entspricht.

7. Prüfstand zur Durchführung eines Prüfversuchs zur Nachbildung einer Testfahrt eines Fahrzeugs (1) entlang einer Fahrtstrecke (2), wobei am Prüfstand (10) zur Durchführung des Prüfversuchs ein Verbrennungsmotor (11) mit einer Belastungsmaschine (12) verbunden ist und eine Prüfstandautomatisierungseinheit (13) vorgesehen ist, die sowohl den Verbrennungsmotor (11), als auch die Belastungsmaschine (12) gemäß einer eingestellten Betriebs-Regelungsart (R_{B}) durch Vorgabe von Sollwerten (SW) des Prüflaufs für den Verbrennungsmotor (11) und der Belastungsmaschine (12) regelt, **dadurch gekennzeichnet, dass** eine Auswerteeinheit (4) zumindest eine Leerlaufbetriebszeit (t_{L}) des Verbrennungsmotors (11) in einem zeitlichen Verlauf einer Fahrzeuggeschwindigkeit (v) und in einem zeitlichen Verlauf einer Fahrpedalstellung (α) als einen Zeitbereich ermittelt, während dem sowohl die Fahrzeuggeschwindigkeit (v), als auch die Fahrpedalstellung (α) Null ist, und/oder zumindest eine Schubbetriebbetriebszeit (ts) des Verbrennungsmotors (11) in einem zeitlichen Verlauf einer Motordrehzahl (N) und im zeitlichen Verlauf der Fahrpedalstellung (α) als einen Zeitbereich ermittelt, während dem die Fahrpedalstellung (α) Null ist und die Motordrehzahl (N) größer einer vorgegebenen Leerlaufdrehzahl (N_{L}) ist **und dass** die Prüfstandautomatisierungseinheit (13) den Prüfversuch während einer Leerlaufbetriebszeit (t_{L}) mit einer Leerlauf-Regelungsart (R_{L}) anstelle der Betriebs-Regelungsart (R_{B}) durchführt und/oder während der Schubbetriebbetriebszeit (t_{S}) mit einer Schubbetrieb-Regelungsart (R_{S}) anstelle der Betriebs-Regelungsart (R_{B}) durchführt.

## Claims

1. Method for carrying out a test run on a test stand (10) to simulate a test drive of a vehicle (1) along a driving route (2), whereas an internal combustion engine (11) being connected to a dynamometer (12) on the test stand (10) in order to carry out the test run, and both the internal combustion engine (11) and the dynamometer (12) being controlled by a test stand automation unit (13) according to a set operating control mode (R_{B}) by specifying setpoint values (SW) of the test run for the internal combustion engine (11) and for the dynamometer (12), **characterized in that** at least one idle operating time (t_{L}) of the internal combustion engine (11) is determined in a time curve of a vehicle speed (v) and in a time curve of a gas pedal position (α) as a time range, during which time range both the vehicle speed (v) and the gas pedal position (α) are zero and/or at least one overrun operating time (ts) of the internal combustion engine (11) is determined in a time curve of an engine speed (N) and in a time curve of a gas pedal position (α) as a time range, during which time range the gas pedal position (α) is zero and the engine speed (N) is greater than a specified idle speed (N_{L}), **and in that,** in the test stand automation unit (13), in order to carry out the test run, a specified idle control mode (R_{L}) is set instead of the operating control mode (R_{B}) during the idle operating time (t_{L}), and/or a specified overrun control mode (Rs) is set instead of the operating control mode (R_{B}) during the overrun operating time (ts).

2. Method according to claim 1, **characterized in that,** during an idle control mode (R_{L}), a torque (T) of zero is specified as the setpoint value (SW) for the dynamometer (12) and a gas pedal position (α) of zero is specified as the setpoint value (SW) for the internal combustion engine (11).

3. Method according to claim 1, **characterized in that** N/α control is set as the overrun control mode (R_{S}).

4. Method according to claim 1, **characterized in that** an N/T, N/α, N/x, T/n, T/α or T/x control is set as the operating control mode (R_{B}).

5. Method according to claim 1, **characterized in that** an idle speed (N_{L}) of the internal combustion engine (11) is determined as the engine speed (N) during the idle operating time (t_{L}).

6. Method according to claim 5, **characterized in that** a time range is sought as at least one further idle operating time (t_{L}) in a time curve of an engine speed (N), during which time range the engine speed (N) corresponds to the idle speed (N_{L}).

7. Test stand for carrying out a test run to simulate a test drive of a vehicle (1) along a driving route (2), whereas an internal combustion engine (11) being connected to a dynamometer (12) on the test stand (10) in order to carry out the test run, and a test stand automation unit (13) being provided which controls both the internal combustion engine (11) and the dynamometer (12) according to a set operating control mode (R_{B}) by specifying setpoint values (SW) of the test run for the internal combustion engine (11) and for the dynamometer (12), **characterized in that** an evaluation unit (4) determines at least one idle operating time (t_{L}) of the internal combustion engine (11) in a time curve of the vehicle speed (v) and a time curve of the gas pedal position (α) as a time range, during which time range both the vehicle speed (v) and the gas pedal position (α) are zero and/or determines at least one overrun operating time (ts) of the internal combustion engine (11) in a time curve of an engine speed (N) and in a time curve of a gas pedal position (α) as a time range, during which time range the gas pedal position (α) is zero and the engine speed (N) is greater than a specified idle speed (N_{L}), **and in that** the test stand automation unit (13) carries out the test run using an idle control mode (R_{L}) instead of the operating control mode (R_{B}) during the idle operating time (t_{L}) and/or carries out the test run using an overrun operating control mode (Rs) instead of the operating control mode (R_{B}) during the overrun operating time (ts).

## Revendications

1. Procédé permettant la mise en oeuvre d'un essai sur un banc d'essai (10) pour la simulation d'un parcours d'essai d'un véhicule (1) le long d'un trajet (2), un moteur à combustion interne (11) étant relié à une machine de charge (12) au niveau du banc d'essai (10) pour la mise en oeuvre de l'essai et à la fois le moteur à combustion interne (11) et la machine de charge (12) étant régulés par une unité d'automatisation de banc d'essai (13) selon un mode de régulation de fonctionnement (R_{B}) réglé par définition de valeurs de consigne (SW) de la course d'essai pour le moteur à combustion interne (11) et la machine de charge (12), **caractérisé en ce qu'**au moins un temps de fonctionnement au ralenti (t_{L}) du moteur à combustion interne (11) est déterminé dans une courbe temporelle d'une vitesse de véhicule (v) et dans une courbe temporelle d'une position de pédale d'accélérateur (a) en tant que plage temporelle pendant laquelle à la fois la vitesse de véhicule (v) et la position de pédale d'accélérateur (a) sont nulles, et/ou au moins un temps de fonctionnement de décélération (ts) du moteur à combustion interne (11) est déterminé dans une courbe temporelle d'un régime moteur (N) et dans la courbe temporelle de la position de pédale d'accélérateur (a) en tant que plage temporelle pendant laquelle la position de pédale d'accélérateur (a) est nulle, et le régime moteur (N) est supérieur à un régime au ralenti (N_{L}) prédéterminé, et **en ce que** dans l'unité d'automatisation de banc d'essai (13), pour la mise en oeuvre de l'essai, un mode de régulation au ralenti (R_{L}) prédéterminé est réglé à la place du mode de régulation de fonctionnement (R_{B}) pendant le temps de fonctionnement au ralenti (t_{L}) et/ou un mode de régulation de décélération (Rs) prédéterminé est réglé à la place du mode de régulation de fonctionnement (R_{B}) pendant le temps de fonctionnement de décélération (ts).

2. Procédé selon la revendication 1, **caractérisé en ce que,** pendant un mode de régulation au ralenti (R_{L}), un couple (T) de zéro est défini en tant que valeur de consigne (SW) pour la machine de charge (12) et une position de pédale d'accélérateur (a) de zéro est définie en tant que valeur de consigne (SW) pour le moteur à combustion interne (11).

3. Procédé selon la revendication 1, **caractérisé en ce qu'une** régulation N/α est réglée en tant que mode de régulation de décélération (Rs).

4. Procédé selon la revendication 1, **caractérisé en ce qu'**une régulation N/T, N/α, N/x, T/n, T/α ou T/x est réglée en tant que mode de régulation de fonctionnement (R_{B}).

5. Procédé selon la revendication 1, **caractérisé en ce qu'**un régime au ralenti (N_{L}) du moteur à combustion interne (11) est déterminé en tant que régime moteur (N) pendant le temps de fonctionnement au ralenti (t_{L}).

6. Procédé selon la revendication 5, **caractérisé en ce que,** dans une courbe temporelle d'un régime moteur (N), une plage temporelle pendant laquelle le régime moteur (N) correspond au régime au ralenti (N_{L}) est recherchée en tant qu'au moins un autre temps de fonctionnement au ralenti (t_{L}).

7. Banc d'essai permettant la mise en oeuvre d'un essai pour la simulation d'un parcours d'essai d'un véhicule (1) le long d'un trajet (2), un moteur à combustion interne (11) étant relié à une machine de charge (12) au niveau du banc d'essai (10) pour la mise en oeuvre de l'essai et une unité d'automatisation de banc d'essai (13) étant prévue, laquelle régule à la fois le moteur à combustion interne (11) et la machine de charge (12) selon un mode de régulation de fonctionnement (R_{B}) réglé par définition de valeurs de consigne (SW) de la course d'essai pour le moteur à combustion interne (11) et la machine de charge (12), **caractérisé en ce qu'**une unité d'évaluation (4) détermine au moins un temps de fonctionnement au ralenti (t_{L}) du moteur à combustion interne (11) dans une courbe temporelle d'une vitesse de véhicule (v) et dans une courbe temporelle d'une position de pédale d'accélérateur (a) en tant que plage temporelle pendant laquelle à la fois la vitesse de véhicule (v) et la position de pédale d'accélérateur (a) sont nulles, et/ou détermine au moins un temps de fonctionnement de décélération (ts) du moteur à combustion interne (11) dans une courbe temporelle d'un régime moteur (N) et dans la courbe temporelle de la position de pédale d'accélérateur (a) en tant que plage temporelle pendant laquelle la position de pédale d'accélérateur (a) est nulle, et le régime moteur (N) est supérieur à un régime au ralenti (N_{L}) prédéterminé, **et en ce que** l'unité d'automatisation de banc d'essai (13) met en oeuvre l'essai avec un mode de régulation au ralenti (R_{L}) à la place du mode de régulation de fonctionnement (R_{B}) pendant un temps de fonctionnement au ralenti (t_{L}) et/ou avec un mode de régulation de décélération (Rs) à la place du mode de régulation de fonctionnement (R_{B}) pendant le temps de fonctionnement de décélération (ts).
